# EUROPEAN PATENT APPLICATION

(11) **EP 1 329 548 A1**
(43) Date of publication of application: **23.07.2003**
(21) Application number: 02075229.1
(22) Date of filing: 21.01.2002
(51) Int. Cl.: D06M 15/277, D06M 15/295, D06M 15/248

(54) **Method of treatment of a textile or non-woven substrate to render same water and oil repellent**

(71) Applicant: 3M Innovative Properties Company, St. Paul, Minnesota 55133-3427 (US)
(72) Inventor: Audenaert, Frans c/o 3M Europe s.a., 1831 Diegem (BE); Allewaert, Kathy E. c/o 3M Europe s.a., 1831 Diegem (BE)
(74) Representative: Voortmans, Gilbert J.L.

(57) **Abstract**

The present invention relates to a method of treating a non-woven substrate or textile, comprising the step of applying to said non-woven substrate or textile a fluorochemical composition comprising a fluoropolymer that comprises:
(a) between 25 and 97 mole % of units that can be derived from fluorinated monomer selected from the group consisting of monomers according to the general formula:

   R_{f}-X-OC(O)-C(R)=CH₂

   wherein R_{f} represents a perfluorinated aliphatic group having 3 or 4 carbon atoms, X is an organic divalent linking group and R represent hydrogen or a lower alkyl group having 1 to 4 carbon atoms;
(b) between 3 and 75 mole % of units derived from a chlorine containing comonomer selected from the group consisting of vinylidene chloride, vinyl chloride and mixtures thereof;
(c) optionally further units derived from monomers other than a fluorinated monomer and said chlorine containing comonomers; and
the amount of units (a), (b) and (c) adding up to 100%,
whereby said fluorochemical composition is applied in such amount that the weight of fluoropolymer on said non-woven substrate or textile is not more than 3% by weight based on the weight of said non-woven substrate or textile.

## Description

### 1. Field of the invention

The present invention relates to a method of making a textile or non-woven substrate water repellent and/or oil repellent. The invention relates in particular to the use therein of a fluoropolymer that is based on short chain fluorinated monomer units.

### 2. Background of the invention

Compositions for making substrates, in particular fibrous substrates, such as textile, oil- and water repellent have been long known in the art. Fluorochemical compounds have been well known as being highly effective in providing oil and water repellency to substrates and in particular textile substrates. The commercially available fluorochemical compositions can be applied at low levels and are generally effective in providing the desired oil and water repellency properties at these low levels. Such a high efficiency is desired not only because of the cost of fluorochemical compounds but also to assure that the treated substrate retains its characteristics such that disturbing the look and feel thereof is minimized as much as possible. Because of the desired efficiency, the fluorochemical compositions that are generally employed are typically based on compounds that have fluorinated long chain alkyl groups, typically having 8 or more carbon atoms or are based on polymers derived from monomers having fluorinated long chain alkyl groups.

Fluorochemical compositions have also been used to treat non-woven substrates for use in medical applications, e.g. for surgical drapes, gowns or for the purpose of wrapping medical instruments. In such applications, the fluorochemical treatment should be effective in providing a barrier against penetration of bodily fluids, in particular blood. Such barrier should be sustainable for a sufficiently long period.

For example, polymers derived from fluorinated alkyl esters of acrylic or methacrylic acid have been described in US 3,660,360, US 5,876,617, US 4,742,140, US 6,121,372 and US 6,126,849. According to the teachings of these patents, the fluorinated alkyl esters of acrylic or methacrylic acid can be copolymerized with various comonomers including chlorine containing monomers such as vinyl chloride and vinylidene chloride or hydrocarbon monomers such as alkylacrylate. It is shown in these teachings that beneficial repellency properties can be obtained with these polymers but typically, these properties are achieved with polymers that are derived from fluorinated alkyl esters of acrylic or methacrylic acid that have 8 or more carbons in the (per)fluorinated alkyl part of the fluorinated monomer.

From an environmental aspect, it would now be desirable to avoid the use of compounds that have fluorinated long chain alkyl groups. Even if such compounds are polymerized into a macromolecule which is then used in the fluorochemical composition, it has been found difficult to exclude residual low molecular weight compounds that have fluorinated long chain alkyl groups. It has been reported that the latter compounds tend to be bio-accumulating in living organisms; this tendency has been cited as a potential concern regarding some fluorochemical compounds. As a result of this concern, it would be desirable to avoid the use of such compounds.

It is further a general known teaching that in fluoropolymers derived from fluorinated alkylacrylates, with decreasing chain length of the perfluoroalkyl group in the acrylate monomer, the receding dynamic water contact angle decreases and the surface energy increases, thus indicating a lower repellency performance of fluoropolymers based on such short chain fluorinated alkylacrylates. This is for example taught in a publication of 1995 titled "Surface characteristics of fluoroalkyl acrylate copolymers and their applications" by Motonobu Kubo, Surface (Hyoumen), Vol. 33, p 185 and in a publication of F. Audenaert et al. in The Journal of the Textile Institute, Vol. 90, pp. 76-94 of 1999.

It would now be desirable to find an alternative treatment for rendering substrates, in particular textile and non-woven substrates, water and/or oil repellent without using compounds that are environmentally objected to or by using compounds that are less objectionable. In particular, it would be desirable to find such treatment that can provide good dynamic water repellency to textile substrates such that textile substrates can be provided that find utility in rain wear and outerwear articles. Desirably, the alternative treatment can provide non-woven substrates with repellency properties and aqueous liquid penetration inhibition as may be required for the use of such non-woven substrates in medical applications such as in surgical drapes or gowns and medical instrument wrapping. Desirably, the treatment is highly effective and can achieve comparable or better performance as the hereto used fluorochemical compositions.

### 3. Brief description of the invention

The present invention relates to a method of treating a non-woven substrate or textile, comprising the step of applying to said non-woven substrate or textile a fluorochemical composition comprising a fluoropolymer that comprises:
(a) between 25 and 97 mole % of units that can be derived from fluorinated monomer selected from the group consisting of monomers according to the general formula:

   R_{f}-X-OC(O)-C(R)=CH₂

   wherein R_{f} represents a perfluorinated aliphatic group having 3 or 4 carbon atoms, X is an organic divalent linking group and R represent hydrogen or a lower alkyl group having 1 to 4 carbon atoms;
(b) between 3 and 75 mole % of units derived from a chlorine containing comonomer selected from the group consisting of vinylidene chloride, vinyl chloride and mixtures thereof;
(c) optionally further units derived from monomers other than a fluorinated monomer and said chlorine containing comonomers; and
   the amount of units (a), (b) and (c) adding up to 100%,
whereby said fluorochemical composition is applied in such amount that the weight of fluoropolymer on said non-woven substrate or textile is not more than 3% by weight based on the weight of said non-woven substrate or textile.

It has been found that the method of the present invention provides water and oil repellency properties to substrates, in particular textile and non-woven substrates, that approach the repellency properties that are generally associated with long chain alkyl group containing fluorochemicals, even at low application levels of the composition.

It is expected that the fluoropolymer of the present invention, which contains short chain perfluoroalkyl moieties such as for example perfluorobutyl moieties, when exposed to biologic, thermal, oxidative, hydrolytic, and photolytic conditions found in the environment, will break down to various degradation products. For example, compositions comprising perfluorobutylsulfonamido moieties are expected to degrade, at least to some extent, ultimately to perfluorobutylsulfonate salts. It has been found that perfluorobutylsulfonate, tested in the form of its potassium salt, eliminates from the body much more effectively than perfluorohexylsulfonate and even more effectively than perfluorooctylsulfonate.

### 4. Detailed description of the invention

The composition used in the method of treating a non-woven substrate or textile in accordance with the present invention comprises a fluoropolymer comprising units derived from a fluorinated monomer (a), a chlorine containing comonomer (b) and optional further monomer (c), other than a fluorinated monomer or the chlorine containing comonomer (b).

The fluorinated monomer (a) is typically an ester of an α,β-ethylenically unsaturated carboxylic acid and contains a fluoroaliphatic group. The fluorinated monomer can be represented by the general formula

R_{f}-X-OC(O)-C(R)=CH₂ (I)

wherein R_{f} represents a perfluorinated aliphatic group having 3 or 4 carbon atoms, X is an organic divalent linking group and R represents hydrogen or a lower alkyl group having 1 to 4 carbon atoms.

The perfluorinated aliphatic group R_{f} is a perfluorinated, stable, inert, preferably saturated, non-polar, monovalent aliphatic radical containing 3 or 4 carbon atoms. It can be straight chain or branched chain. Especially suitable fluorinated monomers are those of which the R_{f}-group is of the formula C₄F₉-.

The linking group X links the perfluoroaliphatic group R_{f} to the free radical polymerizable group. Linking group X is generally non-fluorinated and preferably contains from 1 to about 20 carbon atoms. X can optionally contain oxygen, nitrogen, or sulfur-containing groups or a combination thereof, and X is free of functional groups that substantially interfere with free-radical polymerization (e.g., polymerizable olefinic double bonds, thiols, and other such functionality known to those skilled in the art). Examples of suitable linking groups X include straight chain, branched chain or cyclic alkylene, arylene, aralkylene, sulfonyl, sulfoxy, sulfonamido, carbonamido, carbonyloxy, urethanylene, ureylene, and combinations thereof such as sulfonamidoalkylene.

Specific examples of fluorinated monomers include:

CF₃CF₂CF₂CF₂CH₂CH₂OCOCR¹=CH₂

CF₃(CF₂)₃CH₂OCOCR¹=CH₂

CF₃(CF₂)₃SO₂N(CH₃)CH₂CH₂OCOCR¹=CH₂

CF₃(CF₂)₃SO₂N(C₂H₅)CH₂CH₂OCOCR¹=CH₂

CF₃(CF₂)₃SO₂N(CH₃)CH₂CH(CH₃)OCOCR¹=CH₂

(CF₃)₂CFCF₂SO₂N(CH₃)CH₂CH₂OCOCR¹=CH₂

wherein R¹ is hydrogen or methyl

The fluorinated monomer or mixture thereof is typically used in amounts such that the amount of the corresponding units thereof in the polymer is between 25 and 97 mole%, preferably between 35 mole % and 95 mole %, more preferably between 35 mole % and 85 mole %.

The chlorine containing comonomer (b) used in the preparation of the fluoropolymer, can be selected from the group consisting of vinylchloride and vinylidenechloride. The chlorine containing comonomer or mixture thereof, is typically used in amounts such that the amount of the corresponding units thereof in the polymer is between 3 and 75 mole %, preferably between 5 and 65 mole % and more preferably between 15 and 65 mole %.

The optional comonomer (c), other than a fluorinated monomer and the chlorine containing monomer (b), is a non-fluorinated monomer and is for example a hydrocarbon group containing monomer such as monomers that can be represented by formula:

Rₕ-L-Z (II)

wherein Rₕ represents an aliphatic group having 4 to 30 carbon atoms, L represents an organic divalent linking group and Z represents an ethylenically unsaturated group. The hydrocarbon group is preferably selected from the group consisting of a linear, branched or cyclic alkyl group, an aralkyl group, an alkylaryl group and an aryl group. Further non-fluorinated monomers include those wherein the hydrocarbon group in formula (II) includes oxyalkylene groups or substituents, such as hydroxy groups and/or cure sites.

Examples of non-fluorinated comonomers include hydrocarbon esters of an α,β-ethylenically unsaturated carboxylic acid. Examples include n-butyl(meth)acrylate, isobutyl(meth)acrylate, octadecyl(meth)acrylate, lauryl(meth)acrylate, cyclohexyl (meth)acrylate, cyclodecyl (meth)acrylate, isobornyl (meth)acrylate, phenyl (meth)acrylate, benzyl (meth)acrylate, adamantyl (meth)acrylate, tolyl (meth)acrylate, 3,3-dimethylbutyl (meth)acrylate, (2,2-dimethyl-1-methyl)propyl (meth)acrylate, cyclopentyl (meth)acrylate, 2-ethylhexyl (meth)acrylate, t-butyl (meth)acrylate, cetyl (meth)acrylate, stearyl (meth)acrylate, behenyl (meth)acrylate, isooctyl (meth)acrylate, n-octyl (meth)acrylate, 4-ethyl-cyclohexyl (meth)acrylate, 2-ethoxyethyl methacrylate and tetrahydropyranyl acrylate. Further non-fluorinated comonomers include allyl esters such as allyl acetate and allyl heptanoate; alkyl vinyl ethers or alkyl allyl ethers such as cetyl vinyl ether, dodecylvinyl ether, ethylvinyl ether; unsaturated acids such as acrylic acid, methacrylic acid, alpha-chloro acrylic acid, crotonic acid, maleic acid, fumaric acid, itaconic acid and their anhydrides and their esters such as vinyl, allyl, methyl, butyl, isobutyl, hexyl, heptyl, 2-ethylhexyl, cyclohexyl, lauryl, stearyl, isobornyl or alkoxy ethyl acrylates and methacrylates; alpha-beta unsaturated nitriles such as acrylonitrile, methacrylonitrile, 2-chloroacrylonitrile, 2-cyanoethyl acrylate, alkyl cyanoacrylates; alpha,beta-unsaturated carboxylic acid derivatives such as allyl alcohol, allyl glycolate, acrylamide, methacrylamide, n-diisopropyl acrylamide, diacetoneacrylamide, aminoalkyl (meth)acrylates such as N,N-diethylaminoethylmethacrylate, N-t-butylaminoethylmethacrylate; alkyl(meth)acrylates having an ammonium group such as (meth)acrylates of the formula X⁻ R₃N⁺-R^{a}-OC(O)-CR¹=CH₂ wherein X⁻ represents an anion such as e.g. a chloride anion, R represents hydrogen or an alkyl group and each R may the same of different, R^{a} represents an alkylene and R¹ represents hydrogen or methyl; styrene and its derivatives such as vinyltoluene, alpha-methylstyrene, alpha-cyanomethyl styrene; lower olefinic hydrocarbons which can contain halogen such as ethylene, propylene, isobutene, 3-chloro-1-isobutene, butadiene, isoprene, chloro and dichlorobutadiene and 2,5-dimethyl-1,5-hexadiene, hydrocarbon monomers comprising (poly)oxyalkylene groups including (meth)acrylates of a polyethylene glycol, (meth)acrylates of a block copolymer of ethylene oxide and propylene oxide, (meth)acrylates of amino- or diamino terminated polyethers and (meth)acrylates of methoxypolyethyleneglycols and hydrocarbon monomers comprising a hydroxyl group include hydroxylgroup containing (meth)acrylates, such as hydroxyethyl(meth)acrylate and hydroxypropyl(meth)acrylate.

In a particular embodiment of the invention, the fluoropolymer includes units having one or more cure sites. These units will typically derive from corresponding comonomers that include one or more cure sites. By the term 'cure site' is meant a functional group that is capable of engaging in a reaction with the substrate to be treated. Examples of cure sites include acid groups such as carboxylic acid groups, hydroxy groups, amino groups and isocyanate groups or blocked isocyanate groups. Examples of comonomers from which a cure site unit may derive include (meth)acrylic acid, maleic acid, maleic anhydride, allyl methacrylate, hydroxybutyl vinyl ether, N-hydroxymethyl (meth)acrylamide, N-methoxymethyl acrylamide, N-butoxymethyl acrylamide, N-isobutoxymethyl acrylamide, glycidylmethacrylate and α,α dimethyl m. isopropenyl benzyl isocyanate . Other examples include polymerizable urethanes, that can be obtained by the reaction of a polymerizable mono-isocyanate with an isocyanate blocking agent or by the reaction of adi- or poly- isocyanate and a hydroxy or amino-functionalized acrylate or methacrylate and an isocyanate blocking agent. Isocyanate blocking agents are compounds that upon reaction with an isocyanate group yield a group that is unreactive at room temperature with compounds that at room temperature normally react with an isocyanate but which group at elevated temperature reacts with isocyanate reactive compounds. Generally, at elevated temperature the blocking group will be released from the blocked (poly)isocyanate compound thereby generating the isocyanate group again which can then react with an isocyanate reactive group. Blocking agents and their mechanisms have been described in detail in "Blocked isocyanates III.: Part. A, Mechanisms and chemistry" by Douglas Wicks and Zeno W. Wicks Jr., Progress in Organic Coatings, 36 (1999), pp. 14-172.

The blocked isocyanate may be aromatic, aliphatic, cyclic or acyclic and is generally a blocked di- or triisocyanate or a mixture thereof and can be obtained by reacting an isocyanate with a blocking agent that has at least one functional group capable of reacting with an isocyanate group. Preferred blocked isocyanates are blocked polyisocyanates that at a temperature of less than 150°C are capable of reacting with an isocyanate reactive group, preferably through deblocking of the blocking agent at elevated temperature. Preferred blocking agents include arylalcohols such as phenols, lactams such as ε-caprolactam, δ-valerolactam, γ-butyrolactam, oximes such as formaldoxime, acetaldoxime, methyl ethyl ketone oxime, cyclohexanone oxime, acetophenone oxime, benzophenone oxime, 2-butanone oxime or diethyl glyoxime. Particular examples of comonomers having a blocked isocyanate group as the cure site include the reaction product of a di-isocyanate, 2-hydroxyethyl(meth)acrylate and 2-butanone oxime or the reaction product of a di-isocyanate, a mono(meth)acrylate of a polyethylene glycol and 2-butanone oxime and the reaction product of a triisocyanate, 1 equivalent of 2-hydroxyethyl(meth)acrylate and 2 equivalents of 2-butanone oxime and the reaction product of α,α-dimethyl m. isopropenyl benzyl isocyanate with 2-butanone oxime..

Preferred optional comonomers (c) that can be copolymerised with the fluorinated monomer (a) and the chlorine containing monomer (b) include those selected from isobutyl (meth)acrylate, butyl (meth)acrylate, 2-ethylhexyl (meth)acrylate, 2-hydroxyethyl methacrylate, lauryl (meth)acrylate, methyl methacrylate, octadecyl(meth)acrylate, N-hydroxymethyl acrylamide, methoxy polyethyleneglycol methacrylate, N-hydroxymethyl acrylamide and urethane (meth)acrylate type monomers as described above.

Optional comonomers (c) or mixtures thereof may be used in amounts such that the amount of monomers (a), (b) and (c) adds up to 100%. Hydrocarbon comonomers of formula (II) above may be used in an amount such that the amount of the corresponding units in the polymer is up to 72 mole %, preferably 3 to 30 mole %. Comonomers having cure sites may be used in amounts such that the amount of the corresponding units in the polymer is up to 20 mole % preferably up to 7 mole %.

The fluoropolymer used in the method of treating is typically prepared by free radical polymerisation e.g. by emulsion polymerisation or mini-emulsion polymerisation techniques. Various surfactants such as anionic, cationic, non-ionic or amphoteric surfactants may be employed. They can be used alone or in combination. Alternatively, the polymerisation may be done in solvent. The polymerisation can be a thermal or photochemical polymerisation, carried out in the presence of a free radical initiator. Useful free radical initiators are known in the art and include azo compounds, such as azobisisobutyronitrile (AIBN), azobisvaleronitrile and azobis(2-cyanovaleric acid), 2,2'-azobis(2-amidinopropane)dihydrochloride and the like, hydroperoxides such as cumene, t-butyl, and t-amyl hydroperoxide, dialkyl peroxides such as di-t-butyl and dicumylperoxide, peroxyesters such as t-butylperbenzoate and di-t-butylperoxy phtalate, diacylperoxides such as benzoyl peroxide and lauroyl peroxide.

The polymerisation may further be carried out in the presence of a chain transfer agent or a chain terminator to tailor the molecular weight and/or properties of the fluorochemical copolymer. Typically, the fluorochemical copolymer of the present invention has a weight average molecular weight between 5000 and 1 000 000, preferably between 5000 and 500 000.

The fluorochemical composition may contain further additives such as buffering agent, agents to impart fire proofing or antistatic properties, fungicidal agents, optical bleaching agents, sequestering agents, mineral salts and swelling agents to promote penetration. It is particularly preferred to include one or more auxiliary components other than the fluoropolymer and that are capable of further improving the oil- and/or water repellency properties of a substrate treated with the fluorochemical composition. Preferably, the auxiliary components are capable of improving the durability of the repellency properties. The auxiliary components are generally non-fluorinated organic compounds and are also called extenders hereinafter. Suitable extenders capable of improving the oil- and/or water repellency properties include for example blocked isocyanates including aromatic and aliphatic blocked isocyanates, aliphatic polyisocyanates and aromatic or aliphatic carbodiimides including aromatic or aliphatic polycarbodiimides. Auxiliary components that are generally capable of improving durability of the repellency properties include non-fluorinated organic compounds that have one or more groups (or a precursor thereof) capable of reacting with the surface of the substrate. Examples thereof include compounds that have isocyanate groups or blocked isocyanates so-called isocyanate extenders or blocked isocyanate extenders. Such extenders are commercially available. Examples of isocyanate extenders include Baygard™ VP SP 23012 available from Bayer Corp., Rucoguard™ EPF 1421 available from and Tubicoat™ Fix ICB available from CHT. Examples of blocked aromatic isocyanate extenders include Baygard™ EDW available from Bayer Corp. and Hydrophobol™ XAN available from Ciba-Geigy. Further useful extenders include the condensates or precondensates of urea or melamine with formaldehyde. Examples of melamine based extenders include Cerol™ EWL available from Clariant and Freepel™ 1225 available from BF Goodrich.

Further useful additives include anionic binders. Suitable anionic binders include polymers having one or more anionic groups for example deriving from one or more monomers having an anionic group and anionic dispersions of polymers, in particular dispersion of non-ionic polymers obtained with an anionic surfactant. Examples of anionic binders based on polymers having anionic groups include polymers derivable from the polymerization of one or more α,β unsaturated carboxylic acids such as acrylic acid, methacrylic acid, itaconic acid and maleic acid. Suitable comonomers for use with the α,β unsaturated carboxylic acids include alkyl acrylates or alkyl methacrylates preferably having 1 to 8 carbon atoms in the alkyl group, acrylamide, methylolacrylamide and hydroxyethylmethacrylate. Examples of anionic binder based on an anionic polymer dispersion include dispersions obtained by dispersing a polyvinylacetate or polyvinylalcohol with an anionic surfactant. A commercially available anionic acrylic binder includes Hycar™ 26553 available from Noveon Inc.

When used, the anionic binder will typically be present in a weight ratio of at least 5:1 relative to the fluoropolymer of the fluorochemical composition. Preferably, the weight ratio of anionic binder to fluoropolymer is between 30:1 and 100:1.

The fluorochemical composition is preferably in the form of an aqueous emulsion but may also be an organic solvent based composition. The fluorochemical composition can be applied using conventional application methods. An aqueous emulsion will generally contain water, an amount of fluorochemical composition effective to provide repellent properties to a substrate treated therewith, and a surfactant in an amount effective to stabilize the emulsion. Water is preferably present in an amount of about 70 to about 2000 parts by weight based on 100 parts by weight of the fluorochemical composition. The surfactant is preferably present in an amount of about 1 to about 25 parts by weight, preferably about 2 to about 10 parts by weight, based on 100 parts by weight of the fluorochemical composition. Conventional cationic, anionic, non-ionic and zwitter ionic surfactants are suitable.

The amount of the treating composition applied to a substrate in accordance with this invention is chosen so that sufficiently high repellency properties are imparted to the substrate surface, said amount usually being such that 0.01% to 3% by weight, preferably 0.05% to 2% by weight, more preferably 0.1 to 1% by weight, based on the weight of the substrate, of fluorochemical composition is present on the treated substrate.

The substrates treated by the fluorochemical composition using the method of this invention are not especially limited and include fibrous materials such as textile, non-woven web of thermoplastic polymer fibers and/or cellulose fibers. The fluorochemical composition is particularly useful for imparting repellency properties to non-woven substrates for application in the medical field, such as surgical drape or gown or wrapping for surgical instruments or for textile, in particular for outerwear or rainwear articles.

In order to affect treatment of a substrate, the substrate can be immersed in a diluted emulsion, comprising the fluorochemical polymer and optional additives. The saturated substrate can then be run through a padder/roller to remove excess emulsion, dried and cured in an oven at a temperature and for a time sufficient to provide a cured treated substrate. This curing process is typically carried out at temperatures between about 50°C and about 190°C depending on the particular system or application method used. In general, a temperature of about 120°C to 170°C, in particular of about 130°C to about 150°C for a period of about 20 seconds to 10 minutes, preferably 2 to 5 minutes, is suitable. A further alternative for applying the composition includes a so-called foam application wherein the composition is applied as a foam to the substrate, which is then dried and cured. For a foam application, the composition will generally be in a highly concentrated form and the composition will then generally include a foaming agent. A highly concentrated composition for a foam application would typically include the fluoropolymer in an amount of up to 20% by weight.

### EXAMPLES

The invention is further illustrated by reference to the following examples without however the intention to limit the invention thereto.

### Formulation and Treatment Procedure

Treatment baths were formulated containing a defined amount of the fluorochemical treatment agent. Treatments were applied to the test substrates by padding to provide a concentration of 0.25 or 0.3% solids (based on fabric weight and indicated as SOF (solids on fabric)) and drying and curing at a temperature and time as indicated in the examples. Substrates used for the evaluation of treatments of this invention are all commercially available and are listed below:
PES/CO: Grey polyester/cotton 65/35, style No. 2681.4, obtained from Utexbel N.V., Ronse, Belgium
PAµ : Polyamide microfiber, style No. 7819.4, obtained from Sofinal, Belgium
PESµ : Polyester microfiber, style No. 6145.3, obtained from Sofinal, Belgium PES/CO medical nonwoven, obtained from Ahlstrom Fiber Composites

Respective data of water and oil repellency shown in the following Examples and Comparative Examples are based on the following methods of measurement and evaluation criteria:

### Bundesmann Test

The impregnating effect of rain on treated substrates was determined using the Bundesmann Test Method (DIN 53888).
In this test, the treated substrates were subjected to a simulated rainfall, while the back of the substrate was being rubbed. The appearance of the upper exposed surface was checked visually after 1, 5 and 10 minutes and was given a rating between 1 (complete surface wetting) and 5 (no water remains on the surface). Sum Bundesmann as reported was the sum of the three ratings.

### Spray Rating (SR)

The spray rating of a treated substrate is a value indicative of the dynamic repellency of the treated substrate to water that impinges on the treated substrate. The repellency was measured by Standard Test Number 22, published in the 1985 Technical Manual and Yearbook of the American Association of Textile Chemists and Colorists (AATCC), and was expressed in terms of 'spray rating' of the tested substrate. The spray rating was obtained by spraying 250 ml water on the substrate from a height of 15 cm. The wetting pattern was visually rated using a 0 to 100 scale, where 0 meant complete wetting and 100 meant no wetting at all.

### Oil Repellency (OR)

The oil repellency of a treated substrate was measured by the American Association of Textile Chemists and Colorists (AATCC) Standard Test Method No. 118-1983, which test is based on the resistance of a treated substrate to penetration by oils of varying surface tensions. Treated substrates resistant only to Nujol® mineral oil (the least penetrating of the test oils) were given a rating of 1, whereas treated substrates resistant to heptane (the most penetrating of the test oils) were given a rating of 8. Other intermediate values were determined by use of other pure oils or mixtures of oils, as shown in the following table.

| Standard Test Liquids | |
|---|---|
| AATCC Oil Repellency Rating Number | Compositions |
| 1 | Nujol® |
| 2 | Nujol® /n-Hexadecane 65/35 |
| 3 | n-Hexadecane |
| 4 | n-Tetradecane |
| 5 | n-Dodecane |
| 6 | n-Decane |
| 7 | n-Octane |
| 8 | n-Heptane |

### Water Repellency Test (WR)

The water repellency (WR) of a substrate was measured using a series of water-isopropyl alcohol test liquids and was expressed in terms of the "WR" rating of the treated substrate. The WR rating corresponded to the most penetrating test liquid that did not penetrate or wet the substrate surface after 15 seconds exposure. Substrates which were penetrated by or were resistant only to 100% water (0% isopropyl alcohol), the least penetrating test liquid, were given a rating of 0, whereas substrates resistant to 100% isopropyl alcohol (0% water), the most penetrating test liquid, were given a rating of 10. Other intermediate ratings were calculated by dividing the percent isopropyl alcohol in the test liquid by 10, e.g., a treated substrate resistant to a 70%/30% isopropyl alcohol/water blend, but not to an 80%/20% blend, would be given a rating of 7.

### Laundering Procedure

The procedure set forth below was used to prepare treated substrate samples designated in the examples below as 5HL IR (5 Home Launderings - ironing).
A 230 g sample of generally square, 400 cm² to about 900 cm² sheets of treated substrate was placed in a washing machine along with a ballast sample (1.9 kg of 8 oz fabric in the form of generally square, hemmed 8100 cm² sheets). A commercial detergent ("Sapton", available from Henkel, Germany, 46 g) was added and the washer was filled to high water level with hot water (40° C.+/-3° C.). The substrate and ballast load were washed five times using a 12-minute normal wash cycle followed by five rinse cycles and centrifuging. The samples were not dried between repeat cycles. After drying, the samples were pressed using an iron with the temperature set for the fiber of the substrate.

### Dry Clean Procedure (DC)

The ability of a substrate, treated according to the method of this invention, to continue performing its function after being subjected to dry cleaning was determined according to AATCC test method 170-1983, note 10.1.

### Hydrostatic pressure test (HH)

The hydrostatic pressure test was done according to the American Association of Textile Chemists and Colorists (AATCC) Standard Test Method No. 127-1989. The test is based on the resistance of a treated substrate to penetration by water. A conditioned substrate was clamped over a horizontal orifice with an 11.5 cm diameter opening and was exposed to a hydrostatic head of distilled water at a temperature of 27°C (+- 1°C), increasing in pressure. The speed of increasing head was selected at 10 cm/min. The height was recorded when leakage first occurred at three places on the mounted substrate. The average pressure for three substrates was recorded.

Abbreviations
V-50 : 2,2'-Azobis(2-amidinopropane) dihydrochloride, available from Wako iBMA: isobutyl methacrylate
Ethoquad™ 18/25 (Akzo Chemicals): methyl polyoxyethylene (15) octadecyl ammonium chloride
Hydrophobol™ XAN: oxime blocked isocyanate extender from Ciba-Geigy.
FC : fluorochemical
HC: hydrocarbon
HEMA: 2-hydroxyethyl methacrylate
IPDI: isophorone diisocyanate
BO : 2-butanone oxime
MeFBSE(M)A: N- methyl perfluoro-butyl sulfonamidoethyl (meth)acrylate
MeFOSE(M)A: N-methyl perfluoro-octyl sulfonamidoethyl (meth)acrylate
N-MAM: N-hydroxymethyl acrylamide
ODMA: octadecyl methacrylate
Tubicoat™ Fix ICB: aliphatic oligomeric isocyanate extender from CHT
VCl₂: vinylidene chloride
UM : urethane monomer, IPDI/HEMA/BO, prepared according to the procedure as given in EP 981 567, p 13, lines 11-16.
Bisomer MPEG2000MA : methoxy polyethyleneglycol (2000) methacrylate, available from BP Chemicals
Sermul™ EA 146 : nonylphenol polyethylene glycol ether (15 EO) sulfate, Na salt, available from Condea
Sermul™ EA 266 : C13 alcohol polyethylene glycol ether (15EO) sulfate, Na salt, available from Condea
Witconate™ AOS : Sodium C-14-16 alpha olefin sulfonate, available from Witco
Uniq™ SCS 6351 : alkyl polyethylene glycol ether (20 EO), available from Unichema-ICI

### Preparation of fluorochemical compositions

Fluorochemical compositions FC-1 to FC-11, and comparative compositions CFC-1 and CFC-2, as given in table 1, were made according to the procedure as described for the synthesis of MeFBSEA/VCl₂ 65/35 (FC-1) :

A 250 ml glass bottle was charged with 39 g MeFBSEA, 120 g water and 30 g acetone. 3 g Ethoquad™ 18/25 (5 % on solids) was added as cationic surfactant. After 0.3 g V-50 initiator (0.5 % on solids) was added, the bottle was deaerated and purged with nitrogen. 21 g VCl₂ was added and a quick stream of nitrogen was passed over the reaction mixture. The bottle was sealed and was put in a Launder-O-meter (AATCC Standard Instrument available from Atlas) at a temperature of 72°C, during 4 hours. After polymerization, acetone was occasionally removed under reduced pressure, to obtain a 33% solids emulsion. This emulsion was then used to treat substrates by pad application as outlined above.

Fluorochemicals FC-12 to FC-21 and comparative fluorochemicals CFC-3 and CFC-4, were made according to the same procedure, but using different emulsifier systems. FC-12 and FC-14 to FC-19 and CFC-3 were made using a mixture of Witconate™ AOS/Sermul™ EA 146/Uniq™ SCS 6351 3.5/3.3/0.25, FC-13, FC-20 and FC-21 and CFC-3 and CFC-4 were made using Witconate™ AOS/Sermul™ EA 266/Uniq™ SCS 6351 3.5/3.3/0.2. The resulting dispersions where anionically stabilized.
In all cases latexes were prepared with very little coagulum formation (>98% yield).

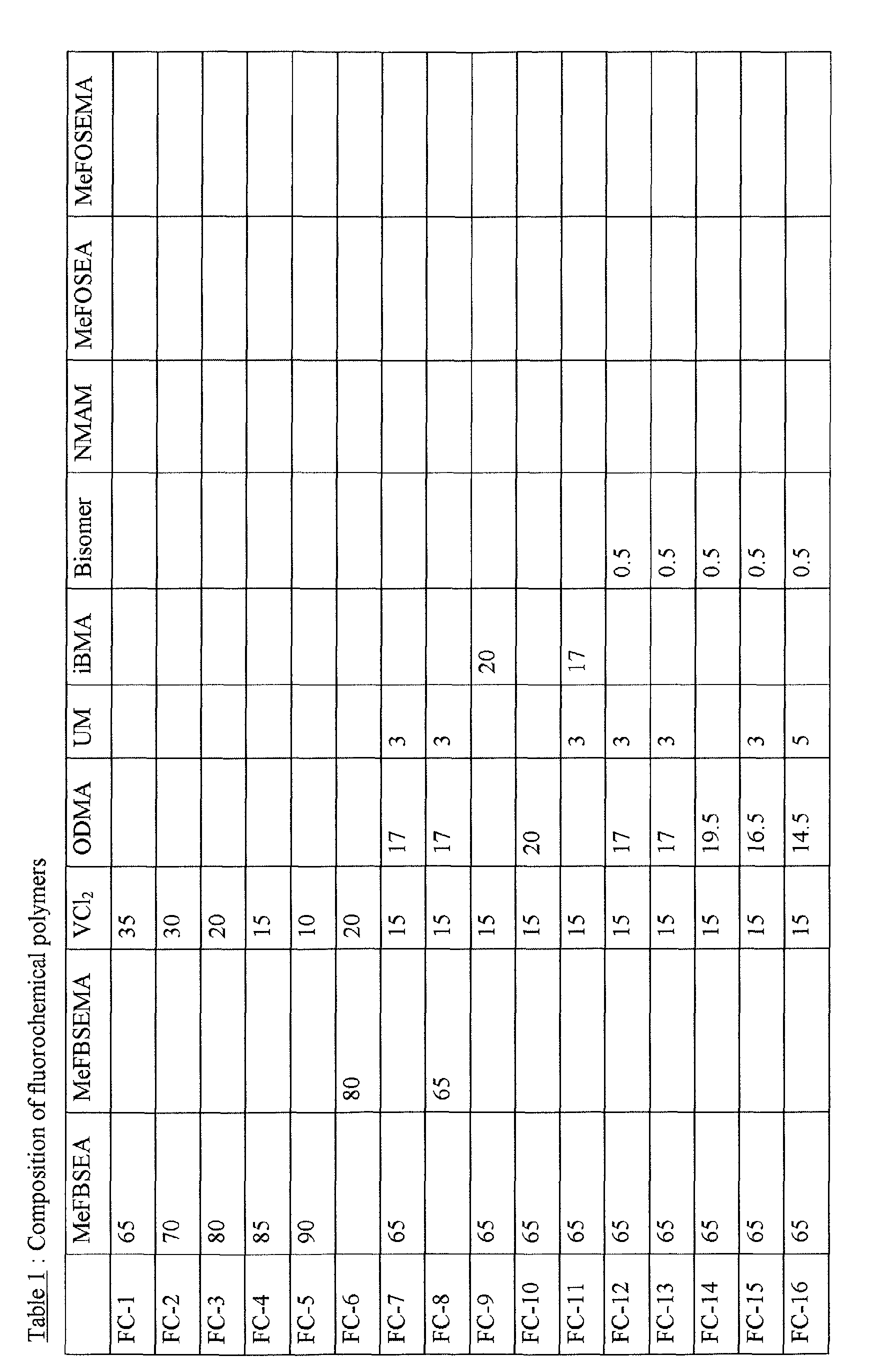

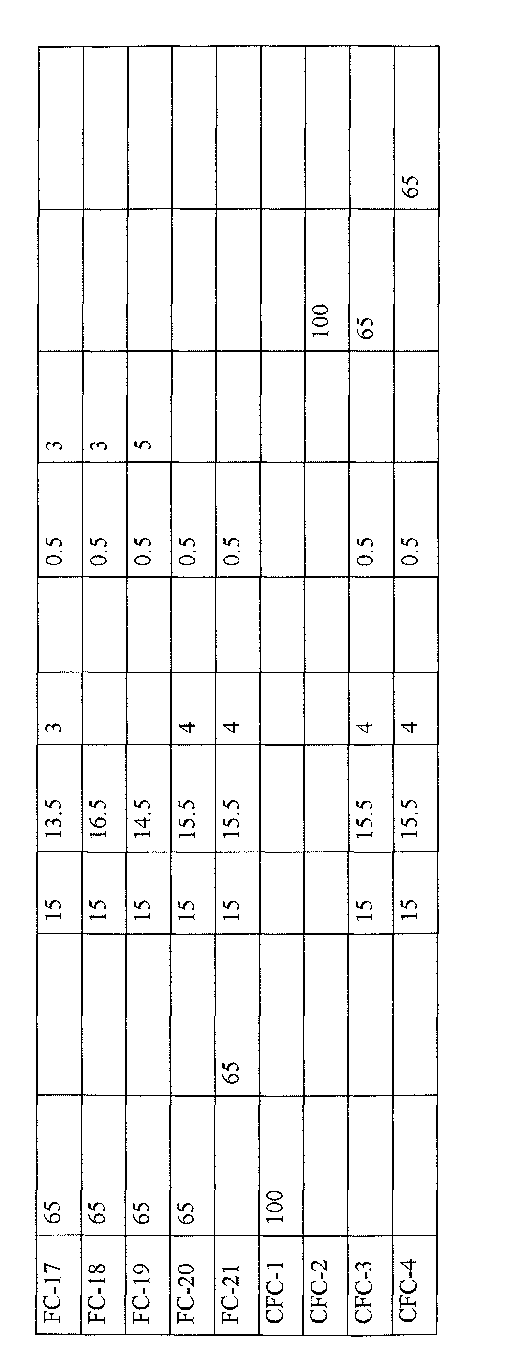

### Examples 1 to 3

In examples 1 to 3, different substrates, as given in table 2, were treated with aqueous solutions of fluorochemical copolymers FC-1, FC-3 and FC-5 respectively by pad application, so as to give an add-on level of 0.3% SOF. Comparative example C-1 was made by treating substrates with a homopolymer of MeFBSEA. The treated substrates were dried and cured at 150°C during 3 minutes. Oil and water repellency were measured before and after home launderings. The results are given in table 2.

**Table 2 :**

| substrates treated with MeFBSEA/VCl₂ copolymers | | | | | |
|---|---|---|---|---|---|
| Performance | Substrate | Ex 1 (FC-1) | Ex 2 (FC-3) | Ex 3 (FC-5) | C-1 (CFC-1) |
| OR | PESµ | 1.5 | 2 | 2.5 | 2 |
| | PAµ | 1.5 | 2.5 | 1.5 | 2.5 |
| | PES/CO | 3 | 3.5 | 2.5 | 4 |
| Sum Bundesmann | PESµ | 14 | 12 | 12 | 3 |
| | PAµ | 4 | 4 | 3 | 3 |
| | PES/CO | 3 | 3 | 3 | 3 |
| 5HL IR SR | PESµ | 100 | 85 | 80 | 70 |
| | PAµ | 70 | 60 | 50 | 0 |
| | PES/CO | 60 | 60 | 0 | 0 |

The results indicate that the dynamic water repellency and durability of a substrate treated with C4 perfluoroalkyl type homopolymer could significantly be improved for all substrates via the incorporation of vinylidene chloride. Especially on PESµ, very strong Bundesmann results and good durability were obtained, even with low VCl₂ levels.

### Examples 4 to 7

In examples 4 to 7 substrates were treated with fluorochemical copolymers as given in table 3, by pad application to give 0.3% SOF. After treatment, the substrates were dried and cured at 150°C during 3 minutes. The repellency properties were measured initially and after 5 home launderings and also after dry clean application. The results are given in table 3.

**Table 3 :**

| Substrates treated with fluorochemical copolymers | | | | | |
|---|---|---|---|---|---|
| Performance | Substrate | Ex 4 (FC-3) | Ex 5 (FC-6) | Ex 6 (FC-7) | Ex 7 (FC-8) |
| OR | PESµ | 1.5 | 0.5 | 2 | 0.5 |
| | PAµ | 2.5 | 1.5 | 3.5 | 1.5 |
| | PES/CO | 3.5 | 1.5 | 4.5 | 1.5 |
| Sum Bundesmann | PESµ | 9.5 | 10.5 | 8.5 | 12 |
| SR | PAµ | 85 | 90 | 80 | 90 |
| | PES/CO | 80 | 90 | 80 | 100 |
| 5HL IR SR | PESµ | 85 | 60 | 80 | 100 |
| | PAµ | 0 | 60 | 0 | 70 |
| | PES/CO | 0 | 0 | 70 | 0 |
| 1 DC SR | PESµ | 75 | 0 | 50 | 80 |

The results in the table indicate that good oil and water repellency was obtained when substrates were treated with a fluorochemical copolymer in which part of the fluorochemical monomer was replaced by a hydrocarbon monomer and monomer comprising a cure site, thus having lower fluorine content.
Especially on PESµ good oil repellency and improved durable water repellency - including laundering and dry-clean durability - could be obtained when a hydrocarbon monomer and a monomer comprising a cure site were incorporated in the fluorochemical polymer.

### Examples 8 to 10

In example 8 PES/CO and PAµ substrates were treated with fluorochemical copolymer FC-2 by pad application so as to give 0.4% SOF. In examples 9 and 10, PES/CO and PAµ were treated with a mixture of fluorochemical copolymer FC-2 and isocyanate extenders, by pad application, so as to give 0.3% SOF FC and 0.1% SOF extender. The treated substrates were dried and cured at 150°C during 3 min. The repellency properties were measured initially and after 5 home launderings. The results are given in table 4.

**Table 4 :**

| PES/CO and PAµ treated with fluorochemical copolymers and extenders | | | | |
|---|---|---|---|---|
| Performance | Substrate | Ex 8 | Ex 9 | Ex 10 |
| Extender | | / | Hydrophobol™ XAN | Tubicoat™ Fix ICB |
| OR | PES/CO | 4 | 5 | 5 |
| | PAµ | 4.5 | 5 | 4.5 |
| Bundesmann | PES/CO | 3 | 6 | 6 |
| | PAµ | 5 | 4.5 | 3.5 |
| 5HL IR SR | PES/CO | 50 | 90 | 95 |
| | PAµ | 50 | 70 | 75 |

The results indicate that the water repellency performance of treated PES/CO substrates could be improved by the use of an extender. Not only the initial repellency was increased, but also much higher durability was observed. For polyamide substrates, especially the durability could be increased.

### Examples 11 to 19

In examples 11 to 19, PES/CO medical non-woven substrates were treated by pad application with fluorochemical compositions, as given in table 5, so as to give an add-on level of 0.25% SOF. The treated substrates were dried in an oven at 160°C for 2 minutes. Oil and water repellency were evaluated. The results are given in table 5.

**Table 5 :**

| PES/CO non-woven treated with fluorochemical copolymers | | | | |
|---|---|---|---|---|
| Ex No | FC | OR | WR | HH (cm) |
| 11 | FC-1 | 6 | 9 | 33 |
| 12 | FC-2 | 6 | 9 | 34 |
| 13 | FC-3 | 6 | 9 | 30 |
| 14 | FC-4 | 6 | 9 | 35 |
| 15 | FC-5 | 6 | 9 | 32 |
| 16 | FC-8 | 6 | 9 | 34 |
| 17 | FC-9 | 5 | 8 | 32 |
| 18 | FC-10 | 6 | 10 | 33 |
| 19 | FC-11 | 5 | 8 | 28 |

As can be seen from table 5, non-woven substrates were made having very high water and oil repellency. Good hydrostatic pressure was noticed.

### Examples 20 to 27

In examples 20 to 27, PES/CO non woven substrates were treated by pad application in an aqueous bath, set at a pH of 9, comprising fluorochemical treating agent, as given in table 6 and Hycar™ 26553 acrylic anionic binder. The substrates were treated so as to give an add-on level of 0.6% SOF fluorochemical treating agent and 20% SOF binder. After treatment, the substrates were dried at 130°C for 2 minutes. The results of oil and water repellency are given in table 6.

**Table 6 :**

| non-woven substrates treated with fluorochemical copolymers | | | | |
|---|---|---|---|---|
| Ex | FC | OR | WR | HH (cm) |
| 20 | FC-12 | 4 | 9 | 25 |
| 21 | FC-13 | 4 | 9 | 23 |
| 22 | FC-14 | 4 | 9 | 20.5 |
| 23 | FC-15 | 5 | 10 | 28 |
| 24 | FC-16 | 5 | 8 | 22.5 |
| 25 | FC-17 | 4 | 9 | 25 |
| 26 | FC-18 | 5 | 9 | 24.5 |
| 27 | FC-19 | 5 | 10 | 25 |

As can be seen from the results in table 6, non-woven substrates having high oil and water repellency were made.

### Examples 28 and 29 and comparative examples C-2 and C-3

In examples 28 and 29 and comparative examples C-2 and C-3, PES/CO non-woven substrates were treated by pad application in an aqueous bath comprising fluorochemical treating agent, as given in table 7 and Hycar™ 26553 acrylic anionic binder. The substrates were treated to have an add-on level of 0.6% SOF fluorochemical and 20% SOF binder. After treatment, the substrates were dried at 130°C for 2 minutes. The results of oil and water repellency are given in table 7.

**Table 7 :**

| non woven substrates treated with fluorochemical copolymers | | | | |
|---|---|---|---|---|
| Ex | FC | OR | WR | HH(cm) |
| 28 | FC-20 | 5.5 | 10 | 24 |
| 29 | FC-21 | 2.5 | 9 | 21 |
| C-2 | CFC-2 | 4.5 | 10 | 21 |
| C-3 | CFC-3 | 3 | 9 | 21.5 |

Surprisingly, it has been noticed that the oil and water repellency properties of substrates treated with short chain alkyl group containing fluorochemical polymers were at least as good as the properties of substrates treated with long chain (C-8) alkyl group containing fluorochemical polymers.

## Claims

1. Method of treating a non-woven substrate or textile, comprising the step of applying to said non-woven substrate or textile a fluorochemical composition comprising a fluoropolymer that comprises:
(a) between 25 and 97 mole% of units that can be derived from fluorinated monomer selected from the group consisting of monomers according to the general formula:
R_{f}-X-OC(O)-C(R)=CH₂
wherein R_{f} represents a perfluorinated aliphatic group having 3 or 4 carbon atoms, X is an organic divalent linking group and R represent hydrogen or a lower alkyl group having 1 to 4 carbon atoms;
(b) between 3 and 75 mole % of units derived from a chlorine containing comonomer selected from the group consisting of vinylidene chloride, vinyl chloride and mixtures thereof;
(c) optionally further units derived from monomers other than a fluorinated monomer and said chlorine containing comonomers; and
the amount of units (a), (b) and (c) adding up to 100%,
whereby said fluorochemical composition is applied in such amount that the weight of fluoropolymer on said non-woven substrate or textile is not more than 3% by weight based on the weight of said non-woven substrate or textile.

2. Method according to claim 1 wherein the fluorochemical composition is applied in such amount that the weight of fluoropolymer on said non-woven substrate or textile is not more than 1% by weight based on the weight of said non-woven substrate or textile.

3. Method according to any of the previous claims wherein said optional further units (c) comprise cure site units and said fluoropolymer comprises said cure site units in an amount of not more than 20 mole %.

4. Method according to any of the previous claims wherein said optional further units (c) comprise units derived from a hydrocarbon comonomer of the formula set forth below and said fluoropolymer comprises said units in an amount of up to 72 mole %:
Rₕ-L-Z
wherein Rₕ represents an aliphatic group having 4 to 30 carbon atoms, L represents an organic divalent linking group and Z represents an ethylenically unsaturated group.

5. Method according to any of the previous claims wherein said organic divalent linking group X is selected from the group consisting of alkylene, aralkylene, arylene, sulfonamido, carbonamido, carbonyloxy, urethanylene, ureylene and combinations thereof.

6. Method according to any of the previous claims wherein said fluorochemical composition further comprises an isocyanate extender, a blocked isocyanate extender, a melamine based extender or an anionic binder.

7. Method according to any of the previous claims wherein said non-woven substrate is a non-woven web of thermoplastic polymer fibers and/or cellulose fibers.

8. Method according to claim 7 wherein said non-woven substrate is a surgical drape or gown or a wrapping for surgical instruments.

9. Method according to claim 1 wherein said textile is a rain- or outerwear article.

10. Non-woven substrate or textile having on a surface thereof an amount of the fluoropolymer as defined in claim 1 of not more than 3% by weight based on the weight of said non-woven substrate or textile.
